# FASCICULE DE BREVET EUROPEEN

(11) **EP 2 256 092 B1**
(45) Date de publication et mention de la délivrance du brevet: **23.12.2015**
(21) Numéro de dépôt: 10005389.1
(22) Date de dépôt: 25.05.2010
(51) Int. Cl.: C02F 3/04

(54) **DISPOSITIF DE FILTRATION AÉROBIE ET INSTALLATION D'ASSAINISSEMENT ÉQUIPÉE D'UN TEL DISPOSITIF**
AEROBE FILTEREINRICHTUNG UND ABWASSERANLAGE MIT EINER SOLCHEN EINRICHTUNG
AEROBIC FILTRATION DEVICE AND INSTALLATION EQUIPPED WITH SUCH A DEVICE

(30) Priorité: 25.05.2009 FR 0902504
(43) Date de publication de la demande: 01.12.2010
(73) Titulaire: Jeanne, Laurent, 7500 Tournai (BE)
(72) Inventeur: Jeanne, Laurent, 7500 Tournai (BE)
(74) Mandataire: Boubal, Denis Henri Jacques

(56) Documents cités:
- WO-A1-02/089957
- NL-C2- 1 018 703
- US-A- 5 360 556
- US-A- 6 132 599
- US-A1- 2004 000 518
- US-B1- 6 238 563

## Description

L'invention est relative à un dispositif de filtration aérobie et concerne également une installation d'assainissement équipée d'un tel dispositif de filtration.

Le domaine de l'invention est celui de l'assainissement non collectif.

Dans ce domaine, on connaît des installations d'assainissement destinées à l'épuration des eaux usées domestiques pour un rejet vers le milieu hydraulique superficiel ou une infiltration des eaux traitées dans le sol.

Ces installations d'assainissement sont adaptées à l'épuration des eaux usées domestiques de nature biodégradable.

Ces installations d'assainissement comprennent généralement, dans le sens de l'écoulement des eaux, d'une part, au moins une fosse toutes eaux dont l'objet est de réaliser un prétraitement anaérobie, des eaux usées brutes et d'autre part, un dispositif de filtration assurant la filtration aérobie des eaux usées prétraitées, de manière gravitaire.

Les eaux usées brutes s'écoulent des divers regards de collecte de l'habitation vers la fosse toutes eaux. Dans la fosse toutes eaux, les graisses et autres flottants s'accumulent en surface pour y former le chapeau, tandis que les matières en suspension décantent en fond pour y former les boues. Ces boues sont digérées par fermentation anaérobie au fil du temps.

Un préfiltre décolloïdeur, en sortie de fosse toutes eaux, permet de piéger les matières en suspension, les graisses et flottants résiduels, qui pourraient obstruer les orifices des rampes de répartition du dispositif de filtration aérobie.

Eventuellement, un dégraisseur complète l'installation d'assainissement, dans le cas où la fosse toutes eaux ne pourrait être implantée à proximité immédiate de l'habitation.

Le dispositif de filtration assure la filtration aérobie des eaux prétraitées. Bien souvent, ce dispositif est constitué d'une cuve intégrant deux étages de filtration utilisant un média filtrant en laine de roche. Le procédé épuratoire repose sur les propriétés de ce média filtrant, notamment son importante surface spécifique, son pouvoir de filtration et de biofiltration, et sa capacité de rétention en eau.

Les effluents prétraités, s'écoulant de la fosse toutes eaux, se répartissent sur la surface du lit de filtration au moyen de rampes de dispersion réglable et s'infiltrent dans le premier étage de filtration pour y être épurés. Les matières en suspension résiduelles s'y déposent et s'y accumulent pour y être progressivement, au fil du temps, digérées et minéralisées.

Le premier étage de filtration dispose d'une ventilation permettant la circulation de l'air au-dessus et partiellement au travers du premier étage de filtration du filtre. Le premier étage de filtration est constitué de deux couches successives de média filtrant.

Chacune de ces couches est obtenue en disposant des sacs contenant des morceaux de laine de roche, perméables aux liquides, selon une configuration donnée.

S'écoulant du premier étage de filtration, les effluents ruissellent gravitairement sur un garnissage plastique, lequel forme un espace de réaération en amont du deuxième étage de filtration. Ce garnissage plastique peut être constitué d'anneaux en polyéthylène. C'est ainsi que les effluents se réaérent et se rechargent en oxygène avant de s'infiltrer dans le deuxième étage de filtration.

Le second étage de filtration, est constitué de plusieurs couches successives de média filtrant.

Chacune de ces couches est obtenue en disposant des sacs contenant des morceaux de laine de roche, perméables aux liquides, selon une configuration donnée.

Le deuxième étage de filtration, l'espace de réaération et le premier étage de filtration sont, en pratique, obtenus par un empilement de sacs perméables aux liquides, contenant soit le média filtrant, à savoir des morceaux de laine de roche, pour constituer les étages de filtration, soit des anneaux plastiques pour l'espace de réaération.

Des sacs de média filtrant sont donc disposés en premier lieu, selon une configuration donnée, et selon plusieurs épaisseurs, pour constituer le deuxième étage de filtration. Puis, des sacs d'anneaux plastiques sont placés, selon une configuration donnée, sur le deuxième étage de filtration afin de constituer l'espace de réaération. Enfin, des sacs de média filtrant sont empilés sur les sacs d'anneaux plastiques de l'espace de réaération, selon une configuration donnée, et selon plusieurs épaisseurs, afin de former le premier étage de filtration.

Ce type d'installation permet ainsi l'obtention d'un effluent traité de qualité conforme aux exigences requises pour le rejet des eaux usées traitées dans le milieu naturel, mais nécessite toutefois un entretien pour la fosse toutes eaux, tel que la vidange des boues de décantation, et des graisses et flottants, lorsque leur accumulation devient trop importante.

Le renouvellement du média filtrant du dispositif de filtration aérobie doit également être prévu lorsque son encrassement devient excessif. Toutefois, ce renouvellement est difficile à prévoir, l'encrassement du média filtrant dépendant étroitement des caractéristiques des effluents bruts à traiter, des charges hydrauliques et charges de pollution reçues sur l'ouvrage. Il existe donc un besoin, dans ce type d'installation, d'une disposition permettant de prévenir l'utilisateur que le média filtrant est encrassé, et qu'il est donc nécessaire de le renouveler.

On connait du document US.5 360.556 une installation d'assainissement destinée à l'épuration des eaux usées comprenant, successivement, suivant le sens de traitement des eaux une fosse septique et un massif filtrant aérobie.

Un premier dispositif de pompage permet d'acheminer les effluents depuis la fosse septique, jusqu'à un dispositif de distribution en partie supérieure du massif aérobie.

Le massif aérobie comprend plusieurs étages de filtration, avec une couche supérieure et une couche inférieure, ainsi qu'une couche intermédiaire support de bactérie.

Les effluents subissent une filtration gravitaire, depuis la couche supérieure, au travers de la couche intermédiaire et jusqu'à la couche inférieure. L'eau filtrée sort du média filtrant et s'écoule dans un drain et jusqu'à un bassin de pompage, dans le fond duquel est prévue une pompe immergée pour le relevage et l'évacuation des eaux.

Cette pompe immergée est commandée à la marche et à l'arrêt par un premier flotteur associé à un contacteur.

Lorsque le flotteur est en position basse, la pompe immergée n'est pas actionnée. Lorsque le niveau des eaux dans le bassin relève le flotteur, ce flotteur met en marche pompe immergée.

Un deuxième flotteur est positionné juste en dessus du premier flotteur. En fonctionnement normal, lorsque le premier flotteur est en position relevée, la pompe immergée doit évacuer les eaux, et ainsi le niveau des eaux dans le bassin ne doit jamais atteindre celui du deuxième flotteur positionné juste en dessus.

Le flotteur supérieur est un flotteur d'alarme qui traduit que le niveau des eaux dans le bassin de pompage est trop élevé. En d'autres termes ce flotteur est activé si l'eau dans la cuve de pompage est mal évacuée : le cas le plus fréquent est celui d'un défaut de la pompe immergée qui n'évacuera pas ou pas assez les eaux du bassin de pompage.
On connaît encore du document US 6.132.599 un dispositif de filtration d'effluents prétraités en sortie de fosse septique. Ce dispositif comprend deux étages de filtration superposés. Les effluents arrivent par une conduite dans une cuve de recirculation située en partie basse du dispositif. Cette cuve collecte également une partie des effluents traités en recirculation. Chacun des deux étages du dispositif de filtration est alimenté par effluents prétraités. L'alimentation des deux étages est réalisée de manière simultanée au moyen d'une pompe électromagnétique et de moyens de répartition des effluents sur chaque étage.

Le fonctionnement de ce dispositif implique la présence de pompes asservies par des flotteurs et contacteurs. Chacun des flotteurs est prévu dans un puisard de pompage et permet de détecter des seuils de niveaux (haut et bas), dans les puisards afin d'arrêter ou de mettre en marche la pompe. Comme le document précédent, un second flotteur, d'alarme, est prévu pour signaler un niveau d'eau trop important dans les puisards de pompage.

Le document US 6.238.563 enseigne une installation de traitement d'effluents prétraités en fosse septique qui comprend deux dispositifs de filtration. Le premier dispositif de filtration comprend une cuve intégrant au moins deux étages de filtration.

Les effluents prétraités en fosse septique sont filtrés gravitairement dans le premier dispositif de filtration et s'écoule dans un bac de récupération en fond de cuve du dispositif. Une pompe immergée permet de relever les eaux et d'acheminer une partie de cette eau à la partie haute du dispositif, en recirculation, et l'autre partie à la partie supérieure d'un deuxième dispositif de filtration.

Un flotteur associé à un contacteur commande la marche ou l'arrêt de cette pompe. Un deuxième flotteur, prévu en partie haute et au dessus du média filtrant du deuxième dispositif de filtration, interdit le fonctionnement de cette pompe sur son seuil haut. Ce second flotteur, prévu en partie supérieure du massif filtrant du second dispositif permet de détecter une accumulation d'eau due à un colmatage du média filtrant du second dispositif.

Le document US-2004/000518 concerne un dispositif de traitement par lit bactérien, par ruissellement gravitaire. Les supports de bactérie prennent par exemple la forme de rideaux suspendus, à leur partie supérieure.

Un capteur de poids permet de cibler le poids des supports de bactérie, et ainsi de détecter une accumulation trop importante de biomasse

L'invention a pour but de pallier cet inconvénient en proposant un dispositif de filtration aérobie permettant d'avertir l'utilisateur de la nécessité de renouveler le média filtrant.

Un autre but de l'invention est de proposer un tel dispositif de filtration entièrement autonome et fiable, ne nécessitant pas de source d'énergie, notamment électrique, pour son fonctionnement.

D'autres buts et avantages apparaîtront au cours de la description qui va suivre, qui n'est donnée qu'à titre indicatif, et qui n'a pas pour but de la limiter.

L'invention concerne un dispositif de filtration aérobie, destiné à être enterré ou non, pour l'assainissement des eaux usées, comprenant au moins une cuve intégrant au moins deux étages de filtration, lesdits étages étant superposés, chacun des étages étant constitué par une ou plusieurs couches successives de média filtrant s'étendant sur une partie de la hauteur de la cuve, ledit dispositif de filtration étant apte à faire subir aux eaux usées une filtration aérobie, de manière gravitaire, au travers desdits au moins deux étages de filtration.

Selon l'invention, le dispositif de filtration présente un dispositif pour la détection d'une perte de charge au niveau du dernier étage de filtration, le plus inférieur, le dispositif comprenant un flotteur, un témoin visuel, ainsi que des moyens de liaison solidarisant ledit flotteur et ledit témoin visuel, ledit flotteur étant apte à s'élever avec la montée des eaux dans le média filtrant au niveau du dernier étage de filtration, à partir d'une position basse correspondant au niveau des eaux en fond de cuve lorsque le média filtrant est neuf, ledit témoin visuel étant visible de l'extérieur en partie supérieure de la cuve à partir d'une certaine course à la montée dudit flotteur à partir de la position basse, représentative d'une valeur seuil traduisant un encrassement du media filtrant.

Selon des caractéristiques optionnelles :
- la course à la montée dudit flotteur, à partir de la position basse, représentative de la valeur seuil, nécessaire afin que ledit témoin soit visible de l'extérieur et comprise entre 10 cm et 30 cm ; basse, nécessaire afin que ledit témoin soit visible de l'extérieur et comprise entre 10 cm et 30 cm ;
- les moyens de liaison sont constitués par une tige ou un assemblage d'au moins deux tiges verticales mises bout à bout, par l'intermédiaire d'un raccord ;
- le dispositif de filtration est destiné à être enterré, présentant un fourreau, extérieur à ladite cuve, prévu en saillie à partir de la partie supérieure de la cuve afin de ressortir de terre à proximité de son extrémité supérieure et à l'intérieur duquel ledit témoin visuel est apte à monter ou descendre selon les déplacements dudit flotteur ;
- le dispositif de filtration aérobie présente un fourreau, intérieur à la cuve, pour la protection desdits moyens de liaison et du flotteur ;
- des orifices sont prévus dans la paroi dudit fourreau intérieur à la cuve, au moins à proximité de l'extrémité basse dudit fourreau, afin de permettre la libre mise en eau dudit fourreau ;
- le dispositif de filtration présente des moyens de ventilation de chaque étage de filtration, chaque étage de filtration étant doté d'une ventilation spécifique ;
- le dispositif de filtration présente deux étages de filtration, le premier étage de filtration supérieur étant précédé d'un espace de ventilation supérieure à l'intérieur duquel arrivent les eaux usées par l'intermédiaire d'au moins une rampe de répartition ;
- le média filtrant est constitué à partir de laine de roche, en morceaux, les morceaux étant éventuellement regroupés dans des sacs perméables auxdites eaux à filtrer.

L'invention concerne également une installation d'assainissement comprenant un dispositif de filtration aérobie conforme à l'invention, ledit dispositif étant précédé d'une voire deux fosses toutes eaux, chaque fosse comprenant une cuve avec une entrée d'eau immergée en partie supérieure de la cuve et une sortie d'eau immergée, en partie supérieure de la cuve, ladite fosse toutes eaux permettant la décantation des eaux, l'accumulation des boues de décantation en fond de cuve, et la rétention des matières surnageantes telles que les graisses.

L'invention concerne également l'utilisation du dispositif pour la détection d'une perte de charge au niveau du dernier étage de filtration, conforme au dispositif de filtration aérobie selon l'invention précitée, comme indicateur de remplacement du média filtrant dudit dispositif de filtration.

L'invention sera mieux comprise à la lecture de la description accompagnée des dessins en annexe parmi lesquels :
- la figure 1 est une vue d'une installation d'assainissement enterrée, conforme à l'invention selon un mode de réalisation, permettant l'épuration des eaux brutes d'une habitation domestique,
- la figure 2 est une vue de l'installation telle qu'illustrée à la figure 1, les remblais non illustrés,
- la figure 3 est une vue d'une installation d'assainissement telle qu'illustrée à la figure 1 selon une vue de coupe verticale, illustrant le fonctionnement hydraulique et aéraulique de l'installation,
- la figure 4 est une vue de dessus de l'installation telle qu'illustrée à la figure 3, le dispositif de filtration illustré en transparence,
- la figure 5 est une vue illustrant plus particulièrement le dispositif pour la détection d'une perte de charge au niveau du dernier étage de filtration d'un dispositif de filtration, conforme à l'invention selon un mode de réalisation.

L'invention concerne un dispositif de filtration aérobie 1, destiné à être enterré ou non, pour l'assainissement des eaux usées, comprenant au moins une cuve 2 intégrant au moins deux étages 3, 4 de filtration. Lesdits étages 3, 4 sont superposés, chacun des étages de filtration étant constitué par une couche ou plusieurs couches successives de média filtrant s'étendant sur une partie de la hauteur de la cuve, ledit dispositif de filtration 1 étant apte à faire subir aux eaux usées une filtration aérobie, de manière gravitaire, au travers desdits au moins deux étages de filtration 3, 4.

Le problème qui s'est posé à l'inventeur est de savoir comment permettre, simplement et à moindre coût, de détecter le moment où il est nécessaire de renouveler le média filtrant de l'ensemble des étages de filtration du bloc aérobie 1, lorsque ce dernier est trop encrassé.

L'encrassement du média filtrant dans un tel dispositif, s'effectue au fil du temps, au niveau de l'ensemble des étages de filtration, et par exemple, pour un dispositif aérobie à deux étages de filtration, au niveau du premier étage de filtration 3 et au niveau du deuxième étage de filtration 4.

L'invention est née de la constatation par l'inventeur que dans un tel dispositif de filtration où les étages de filtration sont superposés et empilés l'un sur l'autre, l'encrassement du média filtrant du dernier étage de filtration, le plus inférieur, est plus rapide que celui du média filtrant des étages supérieurs.

L'inventeur a donc prévu de détecter l'encrassement du média filtrant, uniquement au niveau de l'étage de filtration le plus inférieur. Par ailleurs, d'après les constatations de l'inventeur, dans un tel dispositif aérobie, dans lequel la filtration s'effectue de manière gravitaire, l'encrassement du dernier étage de filtration provoque une perte de charge qui se traduit par une montée des eaux à partir du fond de la cuve 2. Le média filtrant devient alors progressivement immergé par le bas, provoquant un déficit d'oxygène préjudiciable aux bactéries épuratrices.

L'inventeur a donc associé à une valeur seuil de montée des eaux à partir d'une position basse l'information selon laquelle le média filtrant est trop encrassé. A cet effet, la position basse, notamment nominale, correspond au niveau des eaux en fond de cuve 2 lorsque le média filtrant du dispositif 1 est neuf. Selon l'invention, cette valeur seuil peut être comprise entre 10 cm et 30 cm, telle que par exemple 20 cm.

Selon l'invention, le dispositif de filtration 1 présente ainsi un dispositif 7 pour la détection d'une perte de charge au niveau du dernier étage de filtration 4, le plus inférieur, le dispositif comprenant un flotteur 8, un témoin visuel 9, des moyens de liaison 10 solidarisant ledit flotteur et ledit témoin visuel 9. Le flotteur 8 est apte à s'élever avec la montée des eaux dans le média filtrant au niveau du dernier étage de filtration à partir de la position basse. Ledit témoin visuel 9 est visible de l'extérieur du dispositif en partie supérieure de la cuve 2, à partir d'une certaine course à la montée du flotteur à partir de ladite position basse.

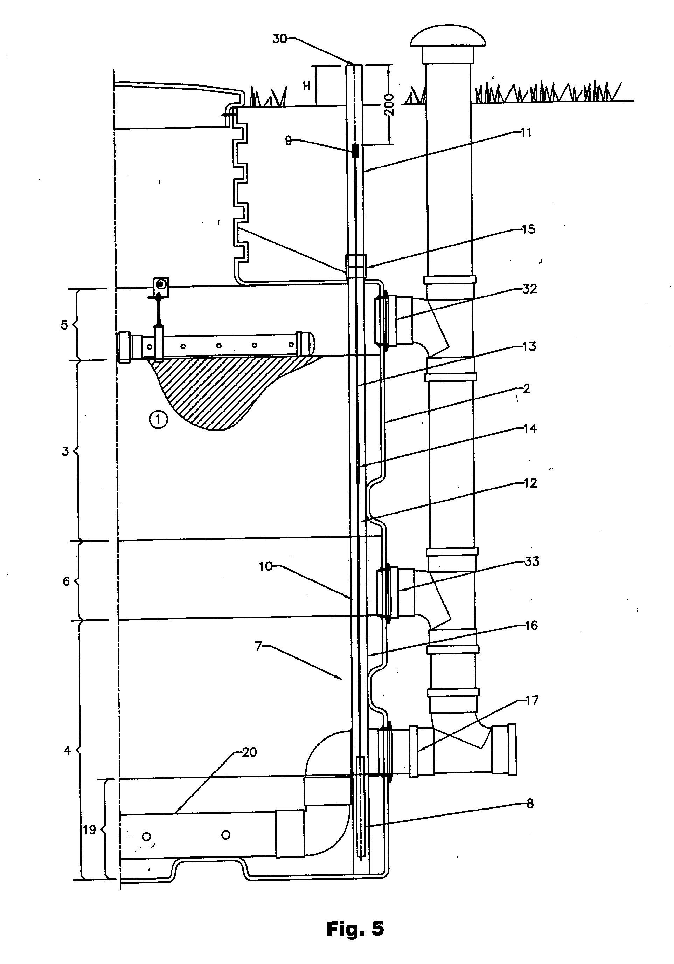

Cette course peut être définie lors de la pose en ajustant la longueur des moyens de liaison. A cet effet, les moyens de liaison peuvent être constitués par au moins une tige, telle que par exemple une tige unique, dont la longueur sera ajustée par découpe. De préférence, les moyens de liaison 10 sont constitués, tels qu'illustrés à la figure 5, par deux tiges 13 et 12 mises bout à bout et assujetties l'une à l'autre par l'intermédiaire d'un raccord 14, tel qu'un manchon. Plus particulièrement, la tige 12 correspond à celle du flotteur, par exemple en fibres de carbone, et la seconde tige 13 en extension sera découpée lors de la pose par rapport à une référence afin de régler la course à la montée de l'ensemble témoin/flotteur à la valeur seuil déterminée.

Avantageusement, le dispositif peut présenter un fourreau 16, intérieur à la cuve 2, pour la protection des moyens de liaison 10 et du flotteur 8. Le fourreau traverse le média filtrant. Ce fourreau 16 permet ainsi la libre translation du flotteur et de la tige dans la cuve évitant ainsi les frottements avec le média filtrant notamment. Ce fourreau 16 peut permettre également de faciliter le nettoyage du dispositif de perte de charge par introduction d'un jet d'eau dans ce dernier, à chaque visite d'entretien. Le fourreau peut être constitué par un tube, cylindrique, par exemple en PVC, s'étendant sur toute la hauteur de la cuve, et prenant appui sur le fond de la cuve à son extrémité basse.

A proximité de son extrémité basse au moins, tel que par exemple sur 30 cm de hauteur, des orifices peuvent être prévus dans la paroi du fourreau 16 afin de permettre la libre mise en eau dudit fourreau 16.

De préférence, afin de limiter l'impact visuel sur site, le dispositif de filtration 1 aérobie peut faire l'objet d'une pose enterrée. Lors de cette phase, on prépare les fouilles et le fond de fouilles selon la qualité de terrain avant de poser les ouvrages et de remblayer le dispositif de filtration aérobie. Eventuellement, le dispositif de filtration aérobie peut être posé sous voirie, dalle ou aire de stockage afin de permettre le passage de véhicules.

Dans le cas d'un dispositif de filtration enterré, ledit dispositif peut présenter, en outre, un fourreau 11 tel qu'illustré à la figure 5, extérieur à la cuve 2, prévu en saillie à partir de la partie supérieure de ladite cuve 2, afin de ressortir de terre à proximité de son extrémité supérieure 30, à l'intérieur duquel ledit témoin visuel 9 est apte à monter ou descendre selon les déplacements dudit flotteur 8.

Selon l'exemple de la figure 5, le fourreau 11 présente à son extrémité supérieure 30 une ouverture permettant de voir le témoin visuel lorsqu'il est proche de cette extrémité, voire arase l'extrémité 30 en position haute. Alternativement, le fourreau 11 peut être transparent à proximité au moins de son extrémité supérieure 30, et pourvu d'un marquage permettant d'indiquer la course haute du témoin visuel 9.

Dans certains cas et toutefois, notamment en cas d'évacuation des eaux usées hors sol, en vide sanitaire surélevé, en cas de terrain en forte pente, ou en présence de nappes phréatiques permanentes ou saisonnières à faible profondeur, le dispositif de filtration ne pourra faire l'objet que d'une pose semi-enterrée.

Dans ce cas, le fourreau 11, extérieur, en extension, n'est plus nécessaire, les moyens de liaison 10, à savoir la tige 12 du flotteur et la tige 13 du témoin visuel 9, sont alors assemblées et insérées dans le fourreau 16, intérieur. A la mise en eaux du dispositif de filtration, la longueur de l'ensemble (des moyens de liaison) est ajustée par découpe de manière à ce que le témoin soit calé à moins ladite valeur seuil déterminée, telle par exemple 20 cm, de l'arase du fourreau 16 du dispositif 7.

Dans le cas d'une installation enterrée, le fourreau extérieur 11 peut être simplement emboîté au niveau du manchon 15. Dans le cas d'une pose enterrée, le fourreau extérieur 11 peut être un tube cylindrique en PVC, par exemple de diamètre 40 mm, dimensionné notamment par découpe afin qu'il ressorte de son extrémité d'une certaine cote H par rapport au terrain fini, tel que par exemple comprise entre 10 cm et 50 cm.

Dans le cas d'une pose enterrée, la longueur des moyens de liaison 10 se détermine une fois le dispositif de filtration en eau, par exemple par la découpe de l'extrémité de la tige 13 à la cote de moins ladite valeur seuil par rapport à l'arase de l'extrémité supérieure 30 du fourreau 11 extérieur.

Le média filtrant des étages de filtration peut être de la laine de roche en morceaux ou toute autre matière convenant à cette application. Les morceaux peuvent être éventuellement regroupés dans des sacs perméables auxdites eaux à filtrer. Plus particulièrement, il peut s'agir de cubes de laine de roche en sacs. Les sacs sont empilés, suivant plusieurs épaisseurs, afin de réaliser successivement, tout d'abord le dernier étage de filtration, puis le ou les étages de filtration supérieurs. Pour chaque étage de filtration, le dispositif peut présenter des moyens de ventilation 5, 6, 32, 33 de chaque étage de filtration, et notamment une ventilation spécifique à chaque étage.

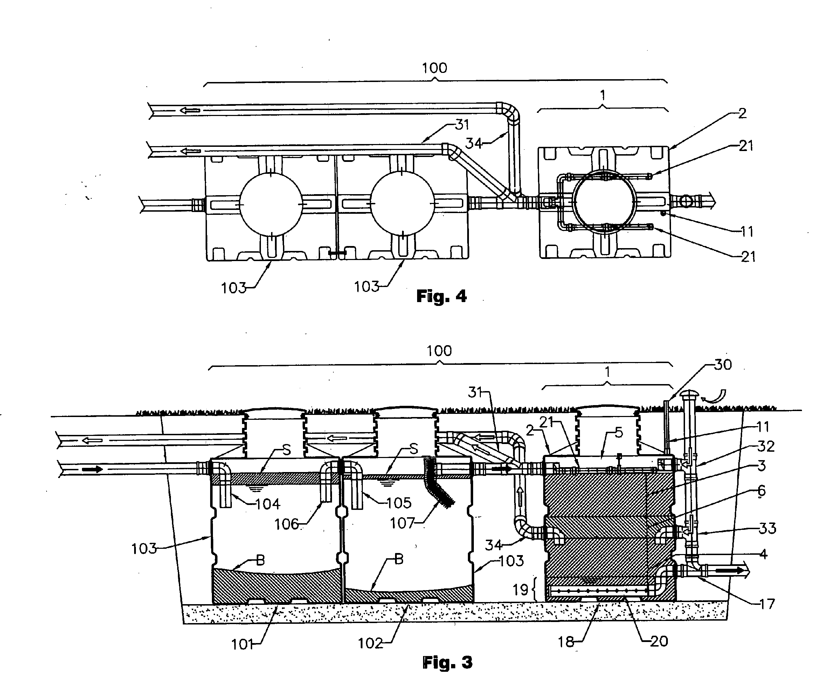

Plus particulièrement, selon l'exemple de la figure 3 non limitatif, le dispositif de filtration est un dispositif à deux étages de filtration 3, 4, le premier étage de filtration 3, supérieur, étant précédé d'un étage de ventilation 5 à l'intérieur duquel arrivent les eaux à filtrer par l'intermédiaire d'un dispositif de répartition 21. Lesdits deux étages de filtration 3, 4 sont séparés, l'un de l'autre, par l'intermédiaire d'un espace de réaération 6 s'étendant sur une partie de la hauteur de la cuve. Cet espace de réaération 6 peut être éventuellement constitué d'éléments plastiques tels que des anneaux, regroupés dans des sacs et empilés selon une couche sur le deuxième étage de filtration.

Dans cet exemple, les deux étages de filtration 3, 4 sont séparés physiquement par l'intermédiaire de l'espace de réaération 6. Selon un autre exemple non illustré, ces deux étages de filtration peuvent toutefois être superposés directement l'un sur l'autre, la ventilation de chaque étage étant assuré par tout moyen adapté tel que des conduites aéroliques en insert dans le média filtrant de chaque étage.

Eventuellement, telle qu'illustrée aux figures 3 ou 5, l'ouverture d'évacuation 17 de la cuve des eaux filtrées est située à un niveau supérieur que le niveau du fond 18 de la cuve 2, afin de permettre la création d'une garde d'eau 19 en fond de cuve. Le dispositif de filtration peut également présenter une conduite d'évacuation ajourée 20, associée à ladite ouverture d'évacuation 17 et située sous le niveau de ladite ouverture 17, afin d'être immergée dans ladite garde d'eau 19.

Selon un autre exemple non illustré, l'ouverture d'évacuation 17 de la cuve 2 peut être située au niveau du fond de ladite cuve.

L'invention concerne également une installation d'assainissement 100 comprenant un dispositif de filtration aérobie conforme à l'invention. Selon l'installation d'assainissement conforme à l'invention, le dispositif de filtration 1 est précédé d'une, voire de deux fosses toutes eaux 101, 102 comprenant une cuve 103 avec une entrée d'eau immergée 104, 105 à la partie supérieure de la cuve et une sortie d'eau immergée 106, 107 en partie supérieure de la cuve 103. Ladite fosse toutes eaux permet la décantation des eaux, l'accumulation des boues B de décantation en fond de cuve 103 et la rétention des matières surnageantes S telles que les graisses.

Telle qu'illustrée selon la figure 3, l'installation d'assainissement peut être enterrée, le fourreau 11 en saillie par rapport à la paroi extérieure de la cuve 2 du dispositif de filtration 1 ressortant de terre à proximité de son extrémité supérieure 30.

Nous décrivons maintenant en détail l'exemple de réalisation illustré en figures qui est une installation d'assainissement enterrée.

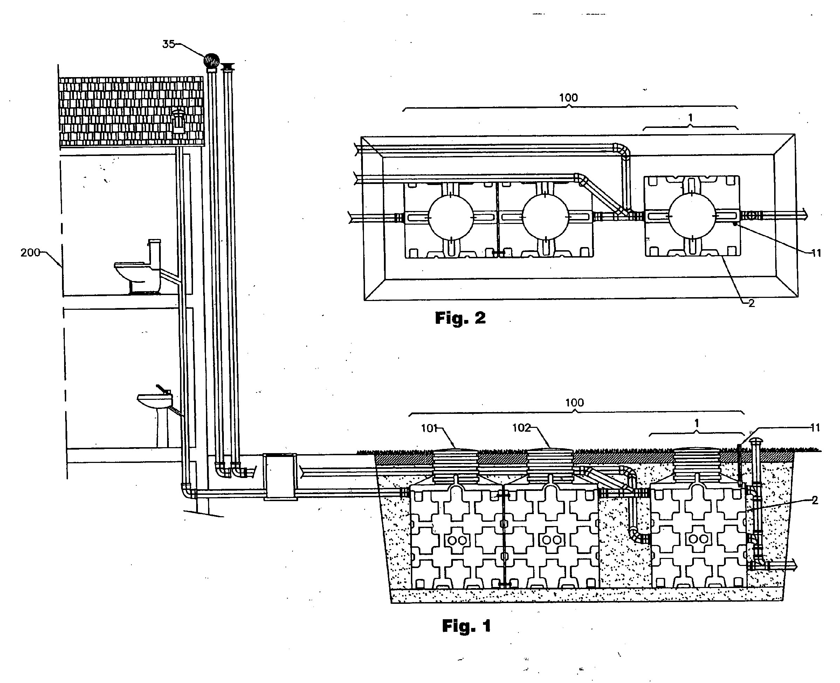

L'installation d'assainissement illustrée à la figure 1 est du type non collectif.

Les eaux usées domestiques brutes s'écoulent de l'habitation au travers du réseau d'assainissement de l'habitation par gravité jusqu'à une première fosse toutes eaux 101 par une entrée d'eau immergée. Les matières en suspension décantent et s'accumulent en fond de fosses pour y former les boues. Ces boues B sont digérées au fil du temps par fermentation anaérobie. Les graisses et autres flottants S surnagent en surface pour y former le chapeau.

Les eaux ressortent par la sortie immergée 106 avant d'entrer par l'entrée immergée 105 de la deuxième fosse toutes eaux 102 pour y subir à nouveau un prétraitement anaérobie. La sortie immergée 107 est pourvue d'un filtre décolloïdeur intégré, permettant de piéger les matières en suspension et graisses et flottants résiduels en sortie de fosse 102 afin d'éviter d'obstruer le dispositif de répartition 21 du dispositif de filtration aérobie 1.

Le dispositif de filtration aérobie 1 assure la filtration aérobie des eaux prétraitées. Ce dispositif de filtration est à deux étages de filtration 3, 4, utilisant un média de filtration en laine de roche.

Les effluents prétraités s'écoulent de la fosse toutes eaux et se répartissent sur la surface du premier étage de filtration 3 du filtre par un dispositif de répartition 21 à deux rampes et s'infiltrent dans le premier étage de filtration 3 pour y être épurés. Les matières en suspension résiduelles se déposent et s'accumulent dans le premier étage de filtration 3 pour y être progressivement, au fil du temps, digérées et minéralisées. Le premier étage de filtration 3 dispose d'une ventilation 32.

Cette ventilation 32 permet la circulation de l'air au dessus et partiellement au travers du premier étage de filtration 3 vers la ventilation haute 31 de la fosse toutes eaux. Le premier étage de filtration 3 est constitué de deux couches successives de média filtrant formées de deux couches successives de sacs contenant des morceaux de laine de roche.

S'écoulant du premier étage de filtration 3, les effluents ruissellent gravitairement sur un garnissage plastique d'un espace de réaération 6. Cet espace est constitué d'anneaux en polyéthylène. Afin de constituer l'espace de réaération, ces anneaux sont regroupés dans des sacs, perméables aux liquides, et disposés sur le deuxième étage de filtration 4 selon une seule épaisseur.

Dans cet espace, les effluents se réaèrent et se rechargent en oxygène avant de s'infiltrer dans le deuxième étage de filtration 4. Une arrivée d'air 33 et une sortie d'air 34 permettent de ventiler l'étage de réaération 6 ainsi que le dernier étage de filtration 4. Un extracteur d'air éolien 35 ou à défaut un extracteur d'air électrique, permet de garantir une bonne réaération des effluents avant qu'ils ne rejoignent le deuxième étage de filtration 4.

Une fois filtrées, les eaux atteignent la garde d'eau 19 en fond du dispositif de filtration 1, à partir duquel elles y sont extraites par l'intermédiaire d'une conduite d'évacuation ajourée 20, immergée dans la garde d'eau 19. La conduite 20 est connectée à une ouverture 17 à un niveau supérieur définissant le niveau de la garde d'eau 19.

Le dispositif de filtration 1 présente, tel qu'illustré à la figure 5, un dispositif 7 pour la détection d'une perte de charge au niveau du dernier étage de filtration 4, à savoir du deuxième étage de filtration. Le dispositif 7 comprend un flotteur 8, un témoin visuel 9, des moyens de liaison 10 solidarisant le flotteur 8 et le témoin visuel 9.

Le flotteur 8, les moyens de liaison 10 sont logés dans un premier fourreau 16, intérieur à la cuve, tel que par exemple un tube cylindrique PVC de diamètre 40 mm, muni d'orifices dans sa paroi à proximité de son extrémité inférieure permettant la libre mise en eau du fourreau 16. Ce fourreau 16 est prolongé en partie extérieure de la cuve 2 par un deuxième fourreau 11, dont la longueur est ajustée lors de la pose afin qu'il ressorte à son extrémité supérieure 30 d'une certaine cote H par rapport au terrain fini, telle que par exemple comprise entre 10 cm et 50 cm.

Lors de la pose, les moyens de liaison constitués par la tige 12 du flotteur et une tige 13 en extension sont ajustés par découpe de la tige 13 afin que le témoin 9 soit inférieur de l'extrémité 30 du fourreau 11 d'une cote correspondant à une valeur seuil telle que par exemple 20 cm lors de la mise en eaux du dispositif. Dans ce dispositif, le renouvellement du média filtrant du premier et du second étage de filtration 3, 4 est à programmer lorsque le témoin 9 affleure l'extrémité 30 du fourreau extérieur 11.

Naturellement, d'autres buts et avantages de la présente invention auraient pu être envisagés sans pour autant sortir du cadre de l'invention définie par les revendications ci-après.

## Revendications

1. Dispositif de filtration aérobie (1), destiné à être enterré ou non, pour l'assainissement des eaux usées, comprenant au moins une cuve (2) intégrant au moins deux étages de filtration, lesdits étages étant superposés (3,4), chacun des étages de filtration étant constitué par une couche ou plusieurs couches successives de média filtrant s'étendant sur une partie de la hauteur de la cuve (2), ledit dispositif de filtration (1) étant apte à faire subir aux eaux usées une filtration aérobie, de manière gravitaire, au travers desdits au moins deux étages de filtration (3, 4), **caractérisé en ce qu'**il présente un dispositif (7) pour la détection d'une perte de charge au niveau du dernier étage de filtration (4), le plus inférieur, ledit dispositif comprenant un flotteur (8), et un témoin visuel (9), ainsi que des moyens de liaison (10) solidarisant ledit flotteur (8) et ledit témoin visuel (9), ledit flotteur (8) étant apte à s'élever avec la montée des eaux dans le média filtrant au niveau du dernier étage de filtration (4) à partir d'une position basse correspondant au niveau des eaux en fond de cuve lorsque le média filtrant est neuf, ledit témoin visuel (9) étant visible de l'extérieur en partie supérieure de la cuve (2) à partir d'une certaine course à la montée dudit flotteur à partir de ladite position basse, représentative d'une valeur seuil, traduisant un encrassement du média filtrant.

2. Dispositif de filtration selon la revendication 1, dans lequel ladite course à la montée dudit flotteur (8), à partir ladite position basse, représentative de la valeur seuil, nécessaire afin que ledit témoin (9) soit visible de l'extérieur est comprise entre 10 cm et 30 cm.

3. Dispositif de filtration selon la revendication 1 ou 2, dans lequel les moyens de liaison (10) sont constitués par une tige ou un assemblage d'au moins deux tiges verticales (12,13), mises bout à bout, par l'intermédiaire d'un raccord (14).

4. Dispositif de filtration selon l'une des revendications 1 à 3, destiné à être enterré, présentant un fourreau (11), extérieur à ladite cuve (2), prévu en saillie à partir de la partie supérieure de la cuve (2) afin de ressortir de terre à proximité de son extrémité supérieure (30) et à l'intérieur duquel ledit témoin visuel (9) est apte à monter ou descendre selon les déplacements dudit flotteur (8)

5. Dispositif de filtration selon l'une des revendications 1 à 4, présentant un fourreau (16), intérieur à ladite cuve (2), traversant le média filtrant, pour la protection desdits moyens de liaison (10) et du flotteur (8).

6. Dispositif de filtration selon la revendication 5, dans lequel des orifices sont prévus dans la paroi du fourreau intérieur (16), au moins à proximité de l'extrémité basse dudit fourreau (16), afin de permettre la libre mise en eau dudit fourreau (16).

7. Dispositif de filtration selon l'une des revendications 1 à 6 présentant des moyens (5,6,32,33) de ventilation de chaque étage de filtration (3,4), chaque étage de filtration étant doté d'une ventilation spécifique (32, 33).

8. Dispositif de filtration selon la revendication 7, à deux étages de filtration (3,4), le premier étage de filtration (3), supérieur étant précédé d'un étage de ventilation (5) à l'intérieur duquel arrive les eaux à filtrer par l'intermédiaire du dispositif de répartition (21).

9. Dispositif de filtration selon l'une des revendications 1 à 8, dans lequel le média filtrant est de la laine de roche, en morceaux, lesdits morceaux étant éventuellement regroupés dans des sacs perméables auxdites eaux à filtrer.

10. Installation d'assainissement (100) comprenant un dispositif de filtration aérobie (1) conforme à l'une quelconque des revendications 1 à 9, le dispositif de filtration (1) étant précédé d'une, voire de deux fosses toutes eaux (101,102), comprenant chacune une cuve (103) avec une entrée d'eau immergée (104 ;105), en partie supérieure de la cuve, et une sortie d'eau immergée (106 ;107), en partie supérieure de la cuve, ladite fosse toutes eaux permettant la décantation des eaux, l'accumulation de boues (B) de décantation en fond de cuve (103), et la rétention des matières surnageantes (S) telle que les graisses.

11. Installation d'assainissement (100) selon la revendication 10, dans laquelle ledit dispositif de filtration (1) conforme à la revendication 4 est enterré, ledit fourreau (11) en saillie par rapport à la paroi supérieure de la cuve (2) ressortant de terre à proximité de son extrémité supérieure (30).

12. Utilisation du dispositif (7) pour la détection d'une perte de charge au niveau du dernier étage de filtration (4), conforme au dispositif de filtration (1) selon l'une quelconque des revendications 1 à 9 comme indicateur de remplacement du média filtrant dudit dispositif de filtration (1).

## Patentansprüche

1. Aerobe Filtriervorrichtung (1), vorgesehen, um in die Erde eingebettet oder nicht eingebettet zu werden, für die Reinigung von Abwässern, umfassend zumindest einen Behälter (2), in den wenigstens zwei Filterstufen eingegliedert sind, wobei die besagten Stufen (3, 4) übereinander angebracht sind, wobei jede von den Filterstufen durch eine Schicht oder durch mehrere aufeinander folgende Schichten von Filtermedien gebildet ist, die sich über einen Teil der Höhe des Behälters (2) erstrecken, wobei die besagte Filtriervorrichtung (1) geeignet ist, um die Abwässer im freien Gefälle durch die besagten zumindest zwei Filterstufen (3, 4) hindurch aerob zu filtrieren, **dadurch gekennzeichnet, dass** sie eine Vorrichtung (7) für die Feststellung eines Beladungsabfalls im Bereich der letzten, untersten Filterstufe (4) aufweist, wobei die besagte Vorrichtung einen Schwimmer (8) und eine visuelle Anzeige (9) sowie Verbindungsmittel (10) umfasst, die den besagten Schwimmer (8) und die besagte visuelle Anzeige (9) miteinander verbinden, wobei der Schwimmer (8) ausgelegt ist, sich mit den in den Filtermedien steigenden Wässern bis zur Höhe der letzten Filterstufe (4) anzuheben, ausgehend von einer unteren Position, die dem Niveau des Wassers am Boden des Behälters entspricht, wenn das Filtermedium neu ist, wobei die visuelle Anzeige (9) oberhalb des Behälters (2), ab einem bestimmten Hubweg des Schwimmers, ausgehend von der unteren Position, die repräsentativ für einen unteren Wert ist, der eine Verschmutzung der Filtermedien zum Ausdruck bringt, von außen sichtbar ist.

2. Filtriervorrichtung nach Anspruch 1, bei der der besagte Aufwärtshub des Schwimmers (8), der erforderlich ist, damit die Anzeige (9) von außen sichtbar ist, von der unteren Position, die für einen unteren Wert repräsentativ ist, zwischen 10 cm und 30 cm liegt.

3. Filtriervorrichtung nach Anspruch 1 oder 2, bei der die Verbindungsmittel (10) durch ein Verbindungsstück oder durch eine Aneinanderfügung von zumindest zwei vertikalen Verbindungsstücken (12, 13) gebildet sind, die vermittels eines Kupplungsstücks (14) aneinander gefügt sind.

4. Filtriervorrichtung nach einem der Ansprüche 1 bis 3, vorgesehen, um in die Erde eingebettet zu werden, aufweisend ein Hohlrohr (11) an der Außenseite des Behälters (2), das ab dem obersten Teil des Behälters (2) vorspringend vorgesehen ist, um nahe bei seinem obersten Ende (30) aus der Erde hervorzuragen, und in dessem Innerem die besagte visuelle Anzeige (9) in Abhängigkeit von den Bewegungen des Schwimmers (8) auf- und absteigend ist.

5. Filtriervorrichtung nach einem der Ansprüche 1 bis 4, aufweisend an der Innenseite des besagten Behälters (2) ein das Filtermedium durchsetzendes Hohlrohr (16) für den Schutz der besagten Verbindungsmittel (10) und des Schwimmers (8).

6. Filtriervorrichtung nach Anspruch 5, bei welcher in der Wand des inneren Hohlrohres (16), zumindest nahe bei dem unteren Ende des Hohlrohrs (16), Öffnungen vorgesehen sind, um die freie Flutung des Hohlrohres (16) zu erlauben.

7. Filtriervorrichtung nach einem der Ansprüche 1 bis 6, aufweisend Mittel (5, 6, 32, 33) für die Belüftung jeder Filterstufe (3, 4), wobei jede Filterstufe mit einer spezifischen Belüftung (32, 33) ausgestattet ist.

8. Filtriervorrichtung nach Anspruch 7 mit zwei Filterstufen (3, 4), wobei der ersten obersten Filterstufe (3) eine Belüftungsstufe (5) vorangeht, in derem Inneren die zu filtrierenden Wässer vermittels der Verteilungsvorrichtung (21) angelangen.

9. Filtriervorrichtung nach einem der Ansprüche 1 bis 8, in der das Filtermedium zerstückelte Gesteinswolle ist, wobei die besagten Stücke soweit gegebenenfalls in Säcken zusammengefasst sind, die für die zu filtrierenden Wässer durchlässig sind.

10. Anlage zur Abwasserreinigung (100), umfassend eine aerobe Filtriervorrichtung (1) nach irgendeinem der Ansprüche 1 bis 9, wobei der Filtriervorrichtung (1) eine, oder zwei Klärgruben (101, 102) vorangehen, umfassend jeweils einen Behälter (103) mit einem getauchten Wassereinlauf (104; 105) im obersten Teil des Behälters und mit einem getauchten Wasserauslauf (106; 107) im obersten Teil des Behälters, wobei die besagte Klärgrube die Dekantierung der Gewässer, die Anhäufung von Absetzschlämmen (B) am Boden des Behälters (103) und die Abscheidung von an der Oberfläche schwimmenden Stoffen (S) wie Fetten erlaubt.

11. Anlage zur Abwasserreinigung (100) nach Anspruch 10, in der die besagte Filtriervorrichtung (1) nach Anspruch 4 in die Erde eingebettet ist, wobei das Hohlrohr (11), das hinsichtlich der oberen Wand des Behälters (2) vorspringend ist, nahe bei seinem obersten Ende (30) aus der Erde hervorgeht.

12. Verwendung der Vorrichtung (7) für die Feststellung eines Beladungsabfalls im Bereich der letzten Filterstufe (4) entsprechend der Filtriervorrichtung (1) nach irgendeinem der Ansprüche 1 bis 9 als Indikator für die Ersetzung der Filtriermedien der besagten Filtriervorrichtung (1).

## Claims

1. Aerobic filtration device (1), intended to be buried or not, for the sanitation of waste water, comprising at least one vessel (2) including at least two filtration stages, said stages being placed one above the other (3, 4), each of the filtration stages consisting of a layer or a plurality of successive layers of filtering media extending over part of the height of the vessel (2), said filtration device (1) being able to subject the waste water to an aerobic filtration, by gravity, through said at least two filtration stages (3, 4), **characterised in that** it has a device (7) for detecting a pressure drop at the last filtration stage (4), the lowest one, said device comprising a float (8) and a visual telltale (9), as well as connection means (10) securing together said float (8) and said visual telltale (9), said float (8) being able to lift with the rise in the waters in the filtering medium at the last filtration stage (4) from a low position corresponding to the level of the water at the bottom of the vessel when the filtering medium is new, said visual telltale (9) being visible from the outside at the top part of the vessel (2) as from a certain upward travel of said float from said low position, representing a threshold value expressing a fouling of the filtering medium.

2. Filtration device according to claim 1, in which said upward travel of said float (8), from said low position, representing the threshold value, necessary so that said visual tell tale (9) is visible from the outside, is between 10 cm and 30 cm.

3. Filtration device according to claim 1 or 2, in which the connection means (10) consist of a rod or an assembly of at least two vertical rods (12, 13), put end to end, by means of a coupling (14).

4. Filtration device according to one of claims 1 to 3, intended to be buried, having a sheath (11), external to said vessel (2), provided so as to project from the top part of the vessel (2) in order to emerge from the ground close to its top end (30) and inside which said visual telltale (9) is able to rise or descend according to the movements of said float (8).

5. Filtration device according to one of claims 1 to 4, having a sheath (16), inside said vessel (2), passing through the filtering medium, for protecting said connection means (10) and the float (8).

6. Filtration device according to claim 5, in which orifices are provided in the wall of the internal sheath (16), at least close to the bottom end of said sheath (16), to enable said sheath (16) to be freely put in the water.

7. Filtration device according to one of claims 1 to 6, having means (5, 6, 32, 33) for ventilating each filtration stage (3, 4), each filtration stage being provided with specific ventilation (32, 33).

8. Filtration device according to claim 7, with two filtration stages (3, 4), the first filtration stage (3), the top one, being preceded by a ventilation stage (5) inside which the water to be filtered arrives by means of the distribution device (21).

9. Filtration device according to one of claims 1 to 8, in which the filtering medium is rockwool, in pieces, said pieces optionally being grouped together in bags permeable to said water to be filtered.

10. Sanitation installation (100) comprising an aerobic filtration device (1) according to any one of claims 1 to 9, the filtration device (1) being preceded by one or even two all-water trenches (101, 102), each comprising a vessel (103) with an immersed water inlet (104; 105), at the top part of the vessel, and an immersed water outlet (106; 107), at the top part of the vessel, said all-water trench enabling settling of the water, the accumulation of a settling sludge (B) at the bottom of the vessel (103), and the retention of the supernatant materials (S) such as fats.

11. Sanitation installation (100) according to claim 10, in which said filtration device (1) in accordance with claim 4 is buried, said sheath (11) projecting with respect to the top wall of the vessel (2) emerging from the ground close to its top end (30).

12. Use of the device (7) for detecting a pressure drop at the last filtration stage (4), in accordance with the filtration device (1) according to any one of claims 1 to 9, as an indicator for replacement of the filtering medium of said filtration device (1).
